Europäisches Patentamt

European Patent Office

Office européen des brevets

(11) Numéro de publication: **0 298 159**
**A2**

# (12) DEMANDE DE BREVET EUROPEEN

(21) Numéro de dépôt: **87202082.1**

(22) Date de dépôt: **29.10.87**

(51) Int. Cl.⁴: **A23G 3/20 , A23G 3/00**

(30) Priorité: **17.06.87 BE 8700661**

(43) Date de publication de la demande:
**11.01.89 Bulletin 89/02**

(84) Etats contractants désignés:
**DE ES FR GB IT NL**

(71) Demandeur: **Meuris, Julienne Maria**
**Fabriekstraat 49**
**B-3599 Kaulille(BE)**

(72) Inventeur: **Meuris, Julienne Maria**
**Fabriekstraat 49**
**B-3599 Kaulille(BE)**

(74) Mandataire: **Donné, Eddy**
**M.F.J.Bockstael Arenbergstraat 13**
**B-2000 Anvers(BE)**

(54) **Méthode de fabrication de sucettes et sucettes fabriquées selon cette méthode.**

(57) Méthode de fabrication de sucettes bipartites caractérisées par le fait qu'un élément sphérique (3) est placé dans le creux central d'un premier élément annulaire (1), suite à quoi une pression est appliquée autour de l'élément sphérique (3) sur l'élément annulaire, afin de disposer la matière de l'élément annulaire (1) autour de l'élément sphérique (3) dans le but de fixer celui-ci dans l'élément (1).

*Fig.5*

## Méthode de fabrication de sucettes et sucettes fabriquées selon cette méthode

L'invention présentée a trait à une méthode de fabrication d'un type de sucettes caractérisées par le fait qu'elles se composent de deux parties, la première étant pourvue d'un manche sous la forme d'une tige, et la deuxième étant maintenue dans la première.

Plus particulièrement, l'invention présentée concerne un type de sucettes dont la première partie évoquée ci-dessus consiste en un élément annulaire et la deuxième partie, en un élément sphérique fixé dans la première.

Alors que la première partie telle que prévue par la présente invention peut être réalisée en n'importe quelle matière première (sucrerie et/ou confiserie) utilisée couramment dans la fabrication de sucettes, on pourra utiliser pour la partie sphérique, soit un article de sucrerie et/ou de confiserie similaire à celui utilisé pour la première partie, soit encore, des articles tels que boules dites "magiques", boules de gomme à mâcher ou d'autres articles similaires.

L'invention présentée concerne une méthode permettant la fixation adéquate d'un tel élément sphérique dans l'élément annulaire.

Pour cela, l'invention présentée prévoit que l'élément sphérique est introduit dans le creux central de l'élément annulaire, suite à quoi une pression est appliquée autour de l'élément sphérique sur l'élément annulaire, afin de comprimer la matière de l'élément annulaire et la disposer autour de l'élément sphérique de telle manière que celui-ci soit fixé par serrage dans l'élément annulaire.

En guise d'illustration des caractéristiques de l'invention présentée, on trouvera ci-après une forme d'exécution préférentielle d'une sucette fabriquée par l'application de la méthode prévue par l'invention; cette forme d'exécution est par ailleurs illustrée aux figures jointes et décrites ci-après:

la figure 1 donne une vue latérale de la première partie d'un sucette réalisée en application de l'invention présentée et telle qu'évoquée ci-dessus;

la figure 2 donne une vue de dessus de l'élément présenté à la figure 1;

la figure 3 est une vue similaire à celle présentée à la figure 1, après insertion, dans la première partie, d'une deuxième partie sphérique;

la figure 4 donne une vue de dessus des éléments présentés à la figure 3;

la figure 5 est une vue similaire à celle présentée à la figure 1, après fixation de l'élément sphérique dans l'élément annulaire conformément à la méthode prévue par l'invention.

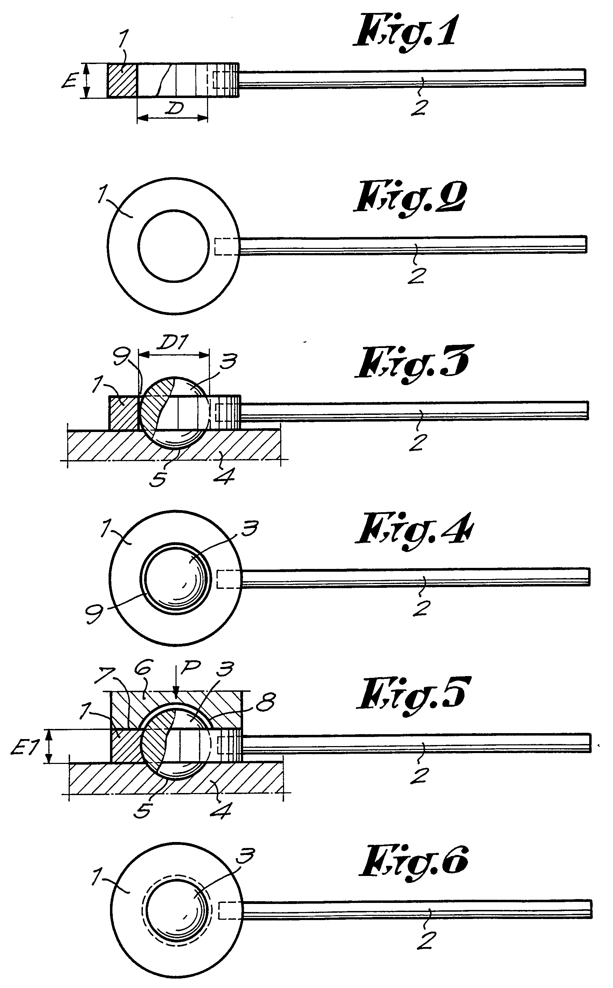

L'élément annulaire illustré aux figures 1 et 2 est un article de sucrerie et/ou de confiserie pourvu d'un manche 2 de manière appropriée.

Aux figures 3 et 4, le creux central de l'élément annulaire de diamètre intérieur D loge un élément sphérique 3 dont le diamètre D1 est inférieur ou égal au diamètre D de l'élément 1 précité. Afin de maintenir la symétrie de l'élément sphérique 3 par rapport à l'élément 1 précité, on pourra, par exemple, recourir à un support 4 dans lequel ou aura aménagé un évidement sphérique concave congruent avec la partie correspondante de l'élément sphérique 3.

Finalement on appliquera sur une telle sucette 1-2-3, comme il est représenté plus particulièrement à la figure 5, un élément de pression 6 possédant une surface annulaire 7 pouvant entrer au contact de la face supérieure de l'élément 1 précité, ainsi qu'un évidement sphérique concave 8 légèrement plus grand que la partie correspondante de l'élément sphérique 3 faisant saillie par rapport à la face supérieure de l'élément 1; de telle manière que lors de l'interaction réciproque de la face supérieure de l'élément 1 et de la face inférieure 7 de l'élément de pression 6, la paroi de la cavité 8 ne puisse entrer au contact de l'élément sphérique 3.

Selon la méthode prévue par l'invention présentée, la compression de l'élément 6 dans le sens de la flèche P à la figure 5, l'article de sucrerie et/ou confiserie de l'élément 1 étant à l'état malléable ou non, a pour effet de réduire l'épaisseur E de l'élément 1 à une épaisseur E1 légèrement inférieure, ainsi que de supprimer l'interstice 9 existant entre l'élément annulaire 1 et l'élément sphérique 3, de manière à ce que l'élément 3 soit solidement maintenu dans l'élément 1.

Il est clair que les applications de l'invention présentée ne se limitent aucunement à la forme d'exécution donnée en exemple dans la description ci-dessus et aux figures jointes.

En particulier, le champ de l'invention présentée couvre des éléments annulaires 1 non cylindriques, pourvus d'éléments 2 de forme autre que sphérique.

## Revendications

1. Méthode de fabrication de sucettes biparties caractérisées par le fait qu'un élément sphérique (3) est placé dans le creux central d'un premier élément annulaire (1), suite à quoi une pression est appliquée autour de l'élément sphérique (3) sur l'élément annulaire, afin de disposer la matière de l'élément annulaire (1) autour de l'élément sphérique (3) dans le but de fixer celui-ci dans l'élément (1).

2. Méthode conforme à la revendication 1, et caractérisée par le fait que la pression exercée sur le premier élément annulaire est orientée dans le sens axial.

3. Méthode conforme à la revendication 1 ou 2, et caractérisée par le fait que la pression est exercée sur l'élément annulaire (1) lorsque la matière qui compose celui-ci est à l'état malléable.

4. Méthode conforme à l'une des conclusions précédentes, et caractérisée par le fait que lors de la déformation de l'élément annulaire (1), l'élément sphérique (3) est soutenu afin de conserver sa symétrie de positionnement par rapport à l'élément (1).

*Fig.1*

$E$     $D$

*1*     *2*

*Fig.2*

*1*     *2*

*Fig.3*

*D1*     *9*     *3*     *1*     *2*

*5*     *4*

*Fig.4*

*1*     *3*     *9*     *2*

*Fig.5*

*7*     *6*     *P*     *3*     *8*     *1*     *E1*     *5*     *4*     *2*

*Fig.6*

*1*     *3*     *2*